# FASCICULE DE BREVET EUROPEEN

(11) **EP 2 460 490 B1**
(45) Date de publication et mention de la délivrance du brevet: **18.09.2013**
(21) Numéro de dépôt: 11290553.4
(22) Date de dépôt: 01.12.2011
(51) Int. Cl.: A61C 7/36

(54) **Activateur de croissance dento-maxillo-faciale**
Wachstumsaktivator für den Mund-Kiefer-Gesichtsbereich
Activator of dental-maxillofacial growth

(30) Priorité: 06.12.2010 FR 1004730
(43) Date de publication de la demande: 06.06.2012
(73) Titulaire: Valero, Stephan, 07200 Aubenas (FR)
(72) Inventeur: Valero, Stephan, 07200 Aubenas (FR)
(74) Mandataire: Flavenot, Bernard

(56) Documents cités:
- DE-B- 1 067 978
- FR-A1- 2 911 490

## Description

L'invention concerne les activateurs de croissance dento-maxillo-faciale.

Différents types d'appareils d'ODMF (Appareil d'orthopédie maxillo-faciale) ont été élaborés au cours du temps pour corriger la posture et la dynamique de la mandibule.

Un tel appareil est par exemple décrit dans le FR-A-2 911 490 au nom du Demandeur et dans le DE-A-1 067 978.

L'appareil décrit dans le FR-A-2 911 490 concerne un activateur de croissance dento-maxillo-faciale amovible comportant essentiellement une gouttière supérieure, une gouttière inférieure, deux ensembles de tiges coulissantes et des articulations entre les tiges coulissantes et les gouttières.

Dans un tel activateur de croissance, chaque gouttière supérieure et inférieure comporte deux armatures métalliques sur lesquelles sont fixés deux tubes supports creux, chaque tube support de section intérieure polygonale, ellipsoïde ou irrégulière étant employé pour maintenir une clavette de réglage, laquelle clavette de réglage fonctionnant avec l'extrémité d'une tige coulissante pour former une articulation et autoriser les mouvements relatifs entre les gouttières supérieure et inférieure.

L'appareil activateur de croissance selon la réalisation décrite ci-dessus présente de multiples avantages. Notamment : l'appareillage fonctionnel physiologique permet une reprise de la croissance squelettique du maxillaire supérieur et de la mandibule du patient par des rééquilibrations et des stimulations des fonctions et des forces musculaires physiologiques de la cavité buccale, essentiellement la fonction linguale secondaire et la mastication, le principe actif de ces fonctions physiologiques étant la contraction musculaire à l'origine des contraintes mécaniques et des mouvements des structures squelettiques et alvéolo-dentaires.

C'est le patient qui est donc à l'origine de la croissance de ses mâchoires, ainsi que du développement et de l'harmonisation de ses arcades dentaires. Par ailleurs, l'appareillage, qui n'agit pas par des forces appliquées directement sur les maxillaires ou sur les dents, est mieux supporté par le patient.

L'articulation des tiges coulissantes moins épaisse entraîne une plus grande discrétion de l'appareil, l'esthétique est améliorée et l'absence de pivots de grandes dimensions favorise l'acceptation du traitement par le patient. L'appareillage, avec son dispositif de fixation des tiges coulissantes comportant des tubes supports rectangulaires et des clavettes associées, fonctionne selon le principe de l'articulation des "maillons de chaîne". Cet agencement permet un positionnement, encore plus vers l'arrière, de l'articulation postérieure des tiges coulissantes, ce qui autorise la disposition de tiges coulissantes plus longues et donc évite qu'elles se déboîtent dans la bouche du patient. La présence d'un écarteur palatin dans l'appareillage fonctionnel permet d'accompagner le développement transversal de l'arcade supérieure au fur et à mesure de la correction des relations antéropostérieures des arcades dentaires.

Du point de vue du praticien, le système de fixation des tiges coulissantes proposé dans cet appareil permet de maîtriser le positionnement des articulations des tiges coulissantes, et donc d'obtenir un appareillage plus efficace notamment vis à vis des mouvements de latéralité.

Dans cet appareil connu, les articulations des tiges coulissantes avec les gouttières peuvent être déplacées pour s'adapter à l'évolution du traitement. Elles comportent essentiellement des clavettes de réglage permettant au praticien de changer aisément les différentes tiges et d'employer des longueurs adaptées pour suivre la croissance mandibulaire vers l'avant sans qu'il soit nécessaire de ressouder des cales ou modifier de façon coûteuse l'appareil, ces clavettes permettant le démontage aisé de l'appareillage et facilitant les réglages.

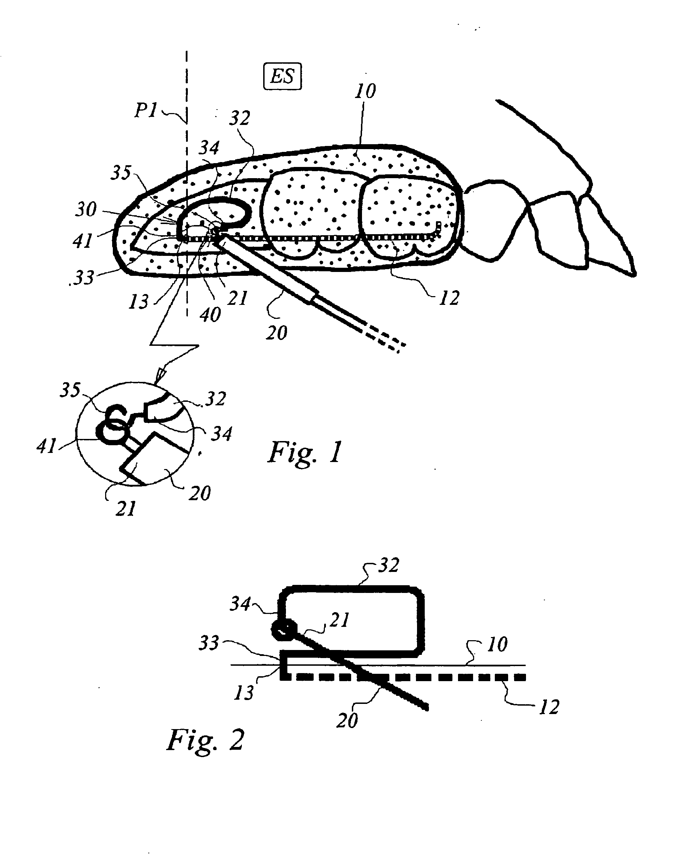

Le document antérieur DE-A-1 067 978 décrit lui aussi un activateur de croissance dento-maxillo-faciale. Comme illustré sur la figure 1 du document, cet activateur comporte une boucle de ressort disposée entre une extrémité de la tige et une bague.

Un activateur de croissance dento-maxillo-faciale selon l'art antérieur cité ci-dessus donne d'excellents résultats, mais il peut être amélioré pour en faciliter son adaptation à la bouche du patient et son évolution dans le temps, aussi bien en fonction de la croissance du patient que des résultats du traitement.

Aussi, la présente invention a-t-elle pour but de réaliser un perfectionnement aux activateurs de croissance dento-maxillo-faciale de l'art antérieur définis notamment au préambule de la présente description. Plus précisément, la présente invention a pour objet un activateur de croissance dento-maxillo-faciale défini dans la revendication 1 annexée.

D'autres caractéristiques et avantages de la présente invention apparaîtront au cours de la description suivante donnée en regard des dessins annexés à titre illustratif mais nullement limitatif, dans lesquels :
La figure 1 représente, en vue de côté, le schéma de principe d'un mode de réalisation d'une partie de l'activateur de croissance dento-maxillo-faciale selon l'invention, essentiellement la partie correspondant à la "gouttière supérieure", la partie correspondant à la "gouttière inférieure" se déduisant sans aucune difficulté de la représentation selon cette figure unique et de l'enseignement apporté aux hommes du métier par le contenu du document antérieur cité ci-avant dans le préambule de la présente description. Cette figure unique comporte en outre, en effet de loupe, la représentation schématique, d'une partie de la structure de l'activateur, et
La figure 2 représente, en vue de côté, le schéma de principe d'une variante du mode de réalisation de la même partie de l'activateur de croissance dento-maxillo-faciale que celle illustrée sur la figure 1.

L'activateur de croissance dento-maxillo-faciale selon l'invention comporte une gouttière supérieure 10, avantageusement du même type que celle illustrée dans le FR-A-2 911 490, et une gouttière inférieure ou analogue, les deux gouttières étant reliées entre elles au moyen de tiges coulissantes 20, une de chaque côté des deux gouttières.

Au sens de la présente invention, l'expression "gouttière" doit être comprise comme tout moyen de liaison avec la denture d'un patient, par exemple typiquement une gouttière, ou une bague comme dans le document allemand référencé ci-avant, ou une pluralité de bagues solidaires par tout moyen d'une ou plusieurs dents, bien qu'un élément en forme de gouttière proprement dite soit la réalisation préférée.

Sur les figures 1 et 2, seule la gouttière supérieure 10 a été illustrée, car la gouttière inférieure ou analogue peut s'en déduire aisément, avec en plus l'aide de l'enseignement apporté par le contenu du document antérieur référencé ci-dessus.

Dans la gouttière supérieure 10 est noyée une première armature métallique 12 dont une extrémité 13 émerge de la gouttière.

L'activateur de croissance dento-maxillo-faciale selon l'invention comporte en outre au moins une tige 20 et des premiers moyens d'articulation 30 montés en coopération entre une première extrémité 21 de cette tige 20 et l'extrémité émergente 13 de la première armature métallique 12.

Selon une caractéristique essentielle de l'invention, comme illustré plus particulièrement sur la figure 1, ces premiers moyens d'articulation 30 sont constitués par une première boucle 32 dont une première extrémité 33 est solidaire de l'extrémité émergente 13 de l'armature 12 et dont la seconde extrémité 34, opposée à la première 33, est libre, et des premiers moyens de liaison 40 avec au moins un degré de liberté entre la première extrémité 21 de la tige 20 et la seconde extrémité 34 de la première boucle 32. En outre, cette première boucle 32 est conformée de façon qu'elle soit située, en grande partie, optionnellement en entier, dans le demi-espace ES délimité par le plan Pl sensiblement perpendiculaire à la première armature 12 en son extrémité émergente 13, et contenant cette première armature 12.

De cette façon, la longueur de la tige 20 peut être maximale et la position de la première boucle 32 lui permet d'être éloignée du palais du patient, ce qui évite de blesser les chairs de ce palais, ces deux avantages étant d'autant plus appréciables que ce genre d'appareil est destiné à être implanté dans la bouche d'un enfant.

De plus et de façon essentielle, cette première boucle 32 est conformée de façon que sa seconde extrémité libre 34 soit située sensiblement à proximité de sa première extrémité 33.

De façon préférentielle, la première armature métallique 12 et la première boucle 32 sont réalisées d'une seule pièce en un même matériau comme de l'acier inoxydable ou analogue.

Selon une réalisation possible et préférée, les premiers moyens de liaison 40 avec au moins un degré de liberté entre la première extrémité 21 de la tige 20 et la seconde extrémité 34 de la première boucle 32 sont constitués par un premier anneau 41 et un premier crochet 35 apte à coopérer avec ce premier anneau 41, le premier anneau et le premier crochet 35 étant montés respectivement solidaires des première et seconde extrémités 21, 34 respectivement de la tige 20 et de la première boucle 32, ou réciproquement.

Dans le mode de réalisation schématiquement illustré sur la figure 1 dans l'aparté en effet de loupe, le crochet est solidaire de l'extrémité libre 34 de la boucle 32 et l'anneau 41 est solidaire de l'extrémité 21 de la tige 20. Il est cependant bien évident que l'agencement inverse est équivalent au sens de la présente invention.

Comme mentionné ci-avant, l'activateur comporte généralement deux gouttières, une gouttière supérieure et une gouttière inférieure comme dans le mode de réalisation illustré dans le document antérieur cité.

En conséquence, l'activateur selon l'invention comporte en outre une seconde gouttière dans laquelle est noyée une seconde armature métallique ayant une extrémité émergeant de cette seconde gouttière et des seconds moyens d'articulation montés en coopération entre la seconde extrémité de la tige 20 et l'extrémité émergente de la seconde armature métallique.

Les seconds moyens d'articulation sont constitués par une seconde boucle dont une première extrémité est solidaire de l'extrémité émergente de la seconde armature métallique et dont la seconde extrémité, opposée à la première, est libre, cette seconde boucle étant en outre conformée de façon que sa seconde extrémité libre soit située sensiblement à proximité de sa première extrémité, et des seconds moyens de liaison avec au moins un degré de liberté entre la seconde extrémité de la tige 20 et la seconde extrémité de la seconde boucle.

Comme la première armature métallique et la première boucle, la seconde armature métallique et la seconde boucle sont avantageusement réalisées d'une seule pièce en un même matériau.

De même, les seconds moyens de liaison avec au moins un degré de liberté entre la seconde extrémité de la tige et la seconde extrémité de la seconde boucle sont avantageusement constitués par un second anneau et un second crochet apte à coopérer avec le second anneau, le second anneau et le second crochet étant montés respectivement solidaires des secondes extrémités respectivement de la tige 20 et de la seconde boucle, ou réciproquement.

Quant à la seconde boucle, elle aussi, elle est conformée de façon à être située, en sa plus grande partie, optionnellement en entier, dans le demi-espace délimité par le plan sensiblement perpendiculaire à la seconde armature en son extrémité émergente, et contenant cette seconde armature.

En fait, en se reportant à la fois à la figure 1 annexée à la présente description et au contenu du documents antérieur cité ci-dessus, la plus grande partie de la première boucle 32 est située à droite du plan Pl et la seconde boucle, qui est associée à la seconde gouttière, est située à gauche du plan similaire au plan Pl, défini par rapport à la seconde armature.

Selon le mode de réalisation illustré sur la figure 1, la boucle 32 s'enroule dans un sens qui peut être qualifié de sens dextrorsum. Cependant, comme illustré schématiquement sur la figure 2, cette boucle 32 peut aussi être enroulée dans le sens opposé à celui selon la figure 1, qui peut être qualifié, dans ce cas, de sens senestrorsum.

Comme dans l'activateur décrit et illustré dans le document antérieur cité, la tige 20 (ou plutôt "les tiges" qui sont généralement au nombre de deux) est une tige télescopique.

L'activateur de croissance dento-maxillo-faciale selon l'invention tel que décrit ci-dessus s'utilise et fonctionne, dans son ensemble, comme ceux décrits et illustrés dans les documents antérieurs cités.

En revanche, sa structure lui confère, par rapport aux activateurs connus, deux autres avantages primordiaux en plus de ceux qui sont mentionnés ci-avant.

A savoir:
- en premier lieu : du fait que les moyens d'articulation 30 montés en coopération entre l'extrémité 21 de la tige 20 et l'extrémité émergente 13 de l'armature métallique 12 comportent une boucle 32 en un matériau métallique qui présente une certaine longueur, cette boucle peut jouer le rôle d'un ressort d'amortissement des chocs qui peuvent se produire pendant les mouvements des mâchoires lors de la rééducation assimilables à ceux de la mastication, grâce à l'élasticité présentée par tout matériau métallique. En outre, du fait que cette boucle soit en majeure partie, sinon en entier, dans le demi-espace ES défini ci-avant, la longueur de l'armature peut être la plus longue possible et la boucle ne gène pas en venant par exemple buter contre le fond du palais pour la gouttière supérieure et contre les dents avant pour la gouttière inférieure.
- en second lieu : du fait que l'extrémité libre 34 de la boucle 32 soit à proximité de l'extrémité émergente 13 de l'armature 12, il est possible de régler la position du point de rotation de la tige 20 à la seconde extrémité 34 de la boucle 32, par rapport à l'extrémité 13 de l'armature 12, non plus en utilisant la déformation élastique naturelle du matériau de la boucle, mais en utilisant la déformation plastique de ce matériau. Le réglage du positionnement de ce point de rotation peut donc être effectué dans une zone qui englobe cette extrémité 13, ce qui permet d'adapter la position relative des deux gouttières respectivement supérieure et inférieure à la morphologie de la bouche du patient.

## Revendications

1. Activateur de croissance dento-maxillo-faciale comportant au moins :
• une première gouttière (10) dans laquelle est noyée une première armature métallique (12), ladite première armature métallique (12) ayant une extrémité (13) émergeant de ladite gouttière (10),
• au moins une tige (20), et
• des premiers moyens d'articulation (30) montés en coopération entre une première extrémité (21) de ladite tige (20) et ladite extrémité émergeante (13) de ladite première armature métallique (12), **caractérisé en ce que** ces premiers moyens d'articulation étant constitués par une première boucle (32) dont une première extrémité (33) est solidaire de ladite extrémité émergente (13) de ladite première armature (12) et dont la seconde extrémité (34), opposée à la première (33), est libre, ladite première boucle (32) étant conformée de façon que sa seconde extrémité libre (34) soit située sensiblement à proximité de sa première extrémité (33), et par des premiers moyens de liaison (40) avec au moins un degré de liberté entre la première extrémité (21) de ladite tige (20) et ladite seconde extrémité (34) de la première boucle (32),
ladite première boucle (32) est située, en sa plus grande partie et optionnellement en son entier, dans le demi-espace (ES) délimité par le plan (PI) sensiblement perpendiculaire à ladite première armature (12) en son extrémité émergente (13) et contenant cette première armature (12).

2. Activateur selon la revendication 1, **caractérisé par le fait que** ladite première armature métallique (12) et ladite première boucle (32) sont réalisées d'une seule pièce en un même matériau.

3. Activateur selon l'une des revendications 1 et 2, **caractérisé par le fait que** les premiers moyens de liaison (40) avec au moins un degré de liberté entre la première extrémité (21) de ladite tige (20) et ladite seconde extrémité (34) de la première boucle (32) sont constitués par un premier anneau (41) et un premier crochet (35) apte à coopérer avec ledit premier anneau (41), ledit premier anneau et ledit premier crochet (35) étant montés respectivement solidaires des première et seconde extrémités (21, 34) respectivement de la tige (20) et de la première boucle (32), ou réciproquement.

4. Activateur selon l'une des revendications précédentes, **caractérisé par le fait qu'**il comporte en outre :
• une seconde gouttière dans laquelle est noyée une seconde armature métallique, ladite seconde armature métallique ayant une extrémité émergeant de ladite seconde gouttière, et
• des seconds moyens d'articulation montés en coopération entre la seconde extrémité de ladite tige et ladite extrémité émergente de ladite seconde armature métallique.

5. Activateur selon la revendication 4, **caractérisé par le fait que** lesdits seconds moyens d'articulation sont constitués par :
• une seconde boucle dont une première extrémité est solidaire de ladite extrémité émergente de ladite seconde armature métallique et dont la seconde extrémité, opposée à la première, est libre, ladite seconde boucle étant en outre conformée de façon que sa seconde extrémité libre soit située sensiblement à proximité de sa première extrémité, et
• des seconds moyens de liaison avec au moins un degré de liberté entre la seconde extrémité de ladite tige et ladite seconde extrémité de la seconde boucle.

6. Activateur selon la revendication 5, **caractérisé par le fait que** ladite seconde armature métallique et ladite seconde boucle sont réalisées d'une seule pièce en un même matériau.

7. Activateur selon l'une des revendications 5 et 6, **caractérisé par le fait que** les seconds moyens de liaison avec au moins un degré de liberté entre la seconde extrémité de ladite tige et ladite seconde extrémité de la seconde boucle sont constitués par un second anneau et un second crochet apte à coopérer avec ledit second anneau, ledit second anneau et ledit second crochet étant montés respectivement solidaires des secondes extrémités respectivement de la tige et de la seconde boucle, ou réciproquement.

8. Activateur selon l'une des revendications 4 à 7, **caractérisé par le fait que** ladite seconde boucle est conformée de façon qu'elle soit située, en sa plus grande partie, optionnellement en son entier, dans le demi-espace délimité par le plan sensiblement perpendiculaire à ladite seconde armature en son extrémité émergente, et contenant cette seconde armature.

9. Activateur selon l'une des revendications précédentes, **caractérisé par le fait que** ladite tige (20) est une tige télescopique.

## Patentansprüche

1. Wachstumsaktivator für den Zahn-Kiefer-Gesichts-Bereich, der wenigstens umfasst:
- eine erste Schiene (10), in die ein erster Metallanker (12) eingefügt ist, wobei der erste Metallanker (12) ein Ende (13) besitzt, das von der Schiene (10) vorsteht,
- wenigstens einen Stift (20) und
- erste Gelenkmittel (30), die zusammenwirkend zwischen einem ersten Ende (21) des Stifts (20) und dem vorstehenden Ende (13) des ersten Metallankers (12) montiert sind, **dadurch gekennzeichnet, dass** diese ersten Gelenkmittel gebildet sind durch eine erste Schleife (32), wovon ein erstes Ende (33) mit dem vorstehenden Ende (13) des ersten Ankers (12) fest verbunden ist und wovon das zweite Ende (34) gegenüber dem ersten Ende (33) frei ist, wobei die erste Schleife (32) so beschaffen ist, dass sich ihr zweites freies Ende (34) im Wesentlichen in der Nähe ihres ersten Endes (33) befindet, und durch erste Verbindungsmittel (40) mit wenigstens einem Freiheitsgrad zwischen dem ersten Ende (21) des Stifts (20) und dem zweiten Ende (34) der ersten Schleife (32),
wobei sich die erste Schleife (32) größtenteils und optional vollständig in dem Halbraum (ES) befindet, der durch die Ebene (PI) begrenzt ist, die zu dem ersten Anker (12) an dessen vorstehendem Ende (13) im Wesentlichen senkrecht ist, und der diesen ersten Anker (12) enthält.

2. Aktivator nach Anspruch 1, **dadurch gekennzeichnet, dass** der erste Metallanker (12) und die erste Schleife (32) einteilig aus demselben Material verwirklicht sind.

3. Aktivator nach einem der Ansprüche 1 und 2, **dadurch gekennzeichnet, dass** die ersten Verbindungsmittel (40) mit wenigstens einem Freiheitsgrad zwischen dem ersten Ende (21) des Stifts (20) und dem zweiten Ende (34) der ersten Schleife (32) durch einen ersten Ring (41) und einen ersten Haken (35), der mit dem ersten Ring (41) zusammenwirken kann, gebildet sind, wobei der erste Ring und der erste Haken (35) mit dem ersten bzw. zweiten Ende (21, 34) des Stifts (20) bzw. der ersten Schleife (32) oder umgekehrt fest verbunden montiert sind.

4. Aktivator nach einem der vorhergehenden Ansprüche, **dadurch gekennzeichnet, dass** er außerdem umfasst:
- eine zweite Schiene, in die ein zweiter Metallanker eingefügt ist, wobei der zweite Metallanker ein von der zweiten Schiene vorstehendes Ende besitzt, und
- zweite Gelenkmittel, die zusammenwirkend zwischen dem zweiten Ende des Stifts und dem vorstehenden Ende des zweiten Metallankers montiert sind.

5. Aktivator nach Anspruch 4, **dadurch gekennzeichnet, dass** die zweiten Gelenkmittel gebildet sind durch:
- eine zweite Schleife, wovon ein erstes Ende mit dem vorstehenden Ende des zweiten Metallankers fest verbunden ist und wovon das zweite Ende gegenüber dem ersten Ende frei ist, wobei die zweite Schleife außerdem so beschaffen ist, dass sich ihr freies zweites Ende im Wesentlichen in der Nähe des ersten Endes befindet, und
- zweite Verbindungsmittel mit wenigstens einem Freiheitsgrad zwischen dem zweiten Ende des Stifts und dem zweiten Ende der zweiten Schleife.

6. Aktivator nach Anspruch 5, **dadurch gekennzeichnet, dass** der zweite Metallanker und die zweite Schleife einteilig aus demselben Material verwirklicht sind.

7. Aktivator nach einem der Ansprüche 5 und 6, **dadurch gekennzeichnet, dass** die zweiten Verbindungsmittel mit wenigstens einem Freiheitsgrad zwischen dem zweiten Ende des Stifts und dem zweiten Ende der zweiten Schleife durch einen zweiten Ring und einen zweiten Haken, der mit dem zweiten Ring zusammenwirken kann, gebildet sind, wobei der zweite Ring und der zweite Haken mit den jeweiligen zweiten Enden des Stifts bzw. der zweiten Schleife oder umgekehrt fest verbunden sind.

8. Aktivator nach einem der Ansprüche 1 bis 7, **dadurch gekennzeichnet, dass** die zweite Schleife so beschaffen ist, dass sie sich größtenteils und optional vollständig in dem Halbraum befindet, der durch die Ebene begrenzt ist, die zu dem zweiten Anker an seinem vorstehenden Ende im Wesentlichen senkrecht ist, und der diesen zweiten Anker enthält.

9. Aktivator nach einem der vorhergehenden Ansprüche, **dadurch gekennzeichnet, dass** der Stift (20) ein Teleskopstift ist.

## Claims

1. An activator for activating dentomaxillofacial growth and comprising at least:
· a first tray (10) in which a first metal reinforcing member (12) is embedded, said first metal reinforcing member (12) having one end (13) emerging from said tray (10);
· at least one rod (20); and
· first hinge means (30) mounted to co-operate between a first end (21) of said rod (20) and said emerging end (13) of said first metal reinforcing member (12);
the activator being **characterized in that** the first hinge means are constituted firstly by a first loop (32) having a first end (33) secured to said emerging end (13) of said first reinforcing member (12) and having a second end (34), opposite from the first end (33), that is free, said first loop (32) being shaped in such a manner that its free second end (34) is situated substantially in the proximity of its first end (33), and secondly by first link means (40) having at least one degree of freedom between the first end (21) of said rod (20) and said second end (34) of the first loop (32), and said first loop (32) is situated for the most part and optionally entirely in the half-space (ES) that is defined by the plane (P1) substantially perpendicular to said first reinforcing member (12) at its emerging end (13) and that contains said first reinforcing member (12).

2. An activator according to claim 1, **characterized by** the fact that said first metal reinforcing member (12) and said first loop (32) are made as a single piece out of the same material.

3. An activator according to claim 1 or claim 2, **characterized by** the fact that the first link means (40) with at least one degree of freedom between the first end (21) of said rod (20) and said second end (34) of the first loop (32) are constituted by a first ring (41) and a first hook (35) suitable for co-operating with said first ring (41), said first ring and said first hook (35) being mounted respectively secured to the first and second ends (21, 34) respectively of the rod (20) and of the first loop (32), or vice versa.

4. An activator according to any preceding claim, **characterized by** the fact that it further comprises:
· a second tray in which a second metal reinforcing member is embedded, said second metal reinforcing member having an end emerging from said second tray; and
seconds hinge means mounted to co-operate between the second end of said rod and said emerging end of said second metal reinforcing member.

5. An activator according to claim 4, **characterized by** the fact that said second hinge means are constituted by:
· a second loop having a first end that is secured to said emerging end of said second metal reinforcing member and having its second end, opposite from the first end, that is free, said second loop also being shaped in such a manner that its free second end is situated substantially in the proximity of its first end; and
· second link means with at least one degree of freedom between the second end of said rod and said second end of the second loop.

6. An activator according to claim 5, **characterized by** the fact that said second metal reinforcing member and said second loop are made as a single piece out of the same material.

7. An activator according to claim 5 or claim 6, **characterized by** the fact that the second link means having at least one degree of freedom between the second end of said rod and said second end of the second loop are constituted by a second ring and a second hook suitable for co-operating with said second ring, said second ring and said second hook being mounted respectively secured to the second ends respectively of the rod and of the second loop, or vice versa.

8. An activator according to any one of claims 4 to 7, **characterized by** the fact that said second loop is shaped in such a manner that it is situated, for the most part and optionally entirely, in the half-space that is defined by the plane substantially perpendicular to said second reinforcing member at its emerging end and that contains said second reinforcing member.

9. An activator according to any preceding claim, **characterized by** the fact that said rod (20) is a telescopic rod.
